(19)

Europäisches
Patentamt
European
Patent Office
Office européen
des brevets

(11) **EP 3 468 022 A1**

(12) **EUROPEAN PATENT APPLICATION**

(43) Date of publication:
**10.04.2019 Bulletin 2019/15**

(51) Int Cl.:
**H02M 3/155** *(2006.01)*    **H02M 3/157** *(2006.01)*
**H05B 33/08** *(2006.01)*    **H02M 1/00** *(2006.01)*

(21) Application number: **17194694.0**

(22) Date of filing: **04.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **NXP B.V.**
**5656 AG Eindhoven (NL)**

(72) Inventor: **BÜTHKER, Henricus Cornelis Johannes**
**Redhill, Surrey RH1 1QZ (GB)**

(74) Representative: **Hardingham, Christopher Mark**
**NXP SEMICONDUCTORS**
**Intellectual Property Group**
**Abbey House**
**25 Clarendon Road**
**Redhill, Surrey RH1 1QZ (GB)**

(54) **SWITCH-MODE POWER CONVERTER**

(57)    A switch-mode power converter (210) is described, the switch-mode power converter (210) comprising: an inductive element (14) having an input and an output; a switching device (16) for selectively connecting said input of said inductive element (14) to a power source (12); a power output (18) for connection to a load (30), said power output (180) being coupled to said output of said inductive element (14); a current comparator (126) configured to generate a current comparator output signal ($V_{CMP}$) based on a comparison of a current flowing through the inductive element (14) and a reference current level ($I_{REF}$); and a control circuit (240) for generating a control signal ($V_{Ctrl}$) for controlling the switching device (16), wherein the control circuit (240) is configured to generate said control signal ($V_{Ctrl}$) based on the current comparator output signal ($V_{CMP}$), a first time delay ($\Delta t_1$) proportional to ($V_{in} - V_{out}$) / $V_{in}$ and a second time delay ($\Delta t_2$) proportional to $V_{out}$ / Vin where Vin is the voltage at the power source (12) and $V_{out}$ is the voltage at the power output (18).

Fig. 5

**Description**

FIELD OF THE INVENTION

The present invention relates to a switch-mode power converter and to an LED power supply including the switch-mode power converter. In particular, but not exclusively, the invention relates to a switch-mode power converter with feed-forward dependent on input and output voltage for reducing or eliminating variations in switching frequency.

BACKGROUND OF THE INVENTION

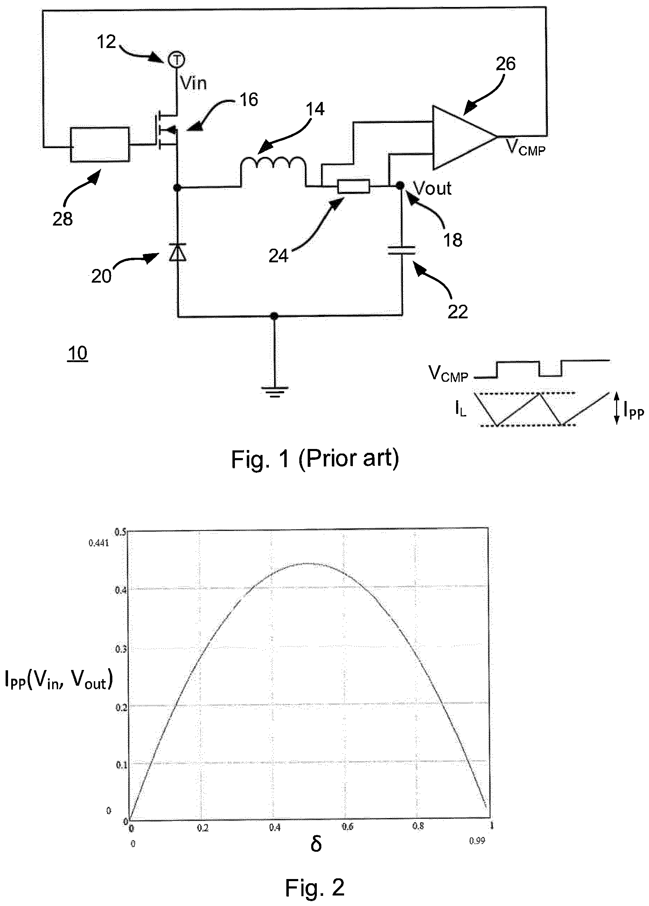

Figure 1 illustrates a conventional hysteretic buck converter 10. A power source 12 providing an input voltage $V_{in}$ is selectively connected to an inductor 14 by a switching element 16 in the form of a MOSFET. A power output 18 is coupled to the inductor 14 for providing an output voltage $V_{out}$ to a load (not shown). A diode 20 is connected in parallel with the power source 12 and switching element 16. A capacitor 22 is connected in parallel with the power output 18 to filter the output voltage $V_{out}$. A resistor 24 is provided in series with the inductor 14 for sensing the current through the inductor 14. A current comparator 26 with hysteresis compares the sensed inductor current with upper and lower reference values and outputs a control signal $V_{CMP}$ for controlling the switching element 16 via a gate drive 28.

When the switching element 16 is on, the current $I_L$ through the inductor 14 rises at a rate $(V_{in} - V_{out})/L$, where L is the inductance of the inductor 14, until it reaches the upper reference value of the current comparator 26. The control signal $V_{CMP}$ output by the current comparator 26 then transitions to low, and the switching element 16 is commanded to switch off via the gate drive 28. When the switching element 16 is off, the inductor current falls at a rate $V_{out}/L$ until it reaches the lower reference value of the current comparator 26. The control signal $V_{CMP}$ output by the current comparator 26 then transitions to high, causing the switching element 16 to switch on. The on-time $T_{on}$ (and thus the duration of the rising slope of the current) and off-time $T_{off}$ (and thus the duration of the falling slope of the current) of the power converter 10 are given by:

$$T_{on} = L \cdot I_{pp} / (V_{in} - V_{out})$$

and

$$T_{off} = L \cdot I_{pp} / (V_{out}) ,$$

wherein $I_{pp}$ is the peak-to-peak inductor current ripple.

The conventional hysteretic converter 10 has a fixed current ripple $I_{pp}$, which is determined by the magnitude of the hysteresis of the current comparator 26. As a result, the switching frequency f of the conventional hysteretic converter 10 depends on the magnitude of the hysteresis $I_{pp}$, the input voltage $V_{in}$, the output voltage $V_{out}$ and the inductor value L:

$$f \quad = 1 / (T_{on} + T_{off})$$
$$= ( 1 / (L \cdot I_{pp}) ) \cdot ((V_{in} - V_{out}) \cdot V_{out} / V_{in} ) .$$

In the case of a variable output voltage $V_{out}$, the switching frequency f shows a parabolic dependence on $V_{out}$ and varies between zero (at $V_{out} = 0$ and $V_{out} = V_{in}$) and a maximum at 50 % duty-cycle (i.e. for $V_{out} / V_{in} = 0.5$). This variable frequency is often unwanted, since it can cause audible noise and may be hard to filter.

In LED matrix applications, the output voltage $V_{out}$ changes frequently with the number of shorted LEDs. The switching frequency f will therefore also vary frequently and over a wide range. This makes filtering more complicated and expensive.

SUMMARY OF THE INVENTION

Aspects of the invention are set out in the accompanying claims. Combinations of features from the dependent claims may be combined with features of the independent claims as appropriate and not merely as explicitly set out in the claims.

According to an aspect of the invention, there is provided a switch-mode power converter comprising:

an inductive element having an input and an output;
a switching device for selectively connecting said input of said inductive element to a power source;
a power output for connection to a load, said power output being coupled to said output of said inductive element;
a current comparator configured to generate a current comparator output signal based on a comparison of a current flowing through the inductive element and a reference current level; and
a control circuit for generating a control signal for controlling the switching device, wherein the control circuit is configured to generate said control signal based on the current comparator output signal, a first time delay proportional to $(V_{in} - V_{out}) / V_{in}$ and a second time delay proportional to $V_{out} / V_{in}$ where $V_{in}$ is the voltage at the power source and $V_{out}$ is the voltage at the power output.

By making the first time delay proportional to $(V_{in} - V_{out}) / V_{in}$ and the second time delay proportional to $V_{out} / V_{in}$, where $V_{in}$ is the voltage at the power source and $V_{out}$ is the voltage at the power output, the frequency of the power converter may be stabilized while retaining the fast and stable response of a hysteretic converter. Frequency stabilization may therefore be achieved without using a clock signal.

The control signal may cause the switching device to have an on-time proportional to $V_{out} / V_{in}$, and an off-time proportional to $1-V_{out} / V_{in}$.

As a result, the switching frequency of the power converter may be independent of duty cycle.

The current comparator may have no hysteresis.

The reference current level may correspond to an average current level, in particular when the power converter is in steady state operation.

In some embodiments of the invention, the current comparator output signal has a 50% duty cycle when the switch-mode power converter is in steady-state operation.

The reference current level may be constant.

By holding the reference current level constant, a constant output current is provided during operation with a load connected to the power output.

In some embodiments of the power converter:

said control signal commands said switching device to switch on at a time equal to said first time delay after said current comparator output signal indicates that said current decreases to a level below said reference current level, and
said control signal commands said switching device to switch off at a time equal to said second time delay after said current comparator output signal indicates said current increases to a level above said reference current level.

In some embodiments of the power converter:

said first time delay is implemented using a first voltage ramp and a first voltage comparator for comparing said first voltage ramp with a first reference voltage, and/or

said second time delay is implemented using a second voltage ramp and a second voltage comparator for comparing said second voltage ramp with a second reference voltage.

The first/second voltage ramp may be triggered by the current comparator output signal.

The slope of said first/second voltage ramp may be proportional to $V_{in}$.

The first/second voltage ramp may be generated by charging a capacitor from a current source.

The current source may be provided by at least one of the following:

a resistance;
a current mirror;
a cascoded current mirror; and/or
a cascoded current mirror with offset compensation.

The first reference voltage may be proportional to $(V_{in}-V_{out})$.

The second reference voltage may be proportional to $V_{out}$.

The first and/or second reference voltage may be provided by at least one of the following:

a voltage divider;

a current mirror;
a cascoded mirror; or
a cascoded mirror with offset compensation.

The switch-mode power converter may comprise further circuitry for varying one of said first and second time delays to compensate delays in the power converter.

This may be particularly useful when operating the power converter at very low current, in which case delays in the power stage may result in an error in the current and a current comparator output signal which deviates from a 50% duty cycle. Said further circuitry may be configured to inject additional current into the control circuit to increase one of the reference voltages and thereby increase the respective time delay. Said further circuitry may be configured to inject additional current into the control circuit when the output signal of the current comparator has a duty cycle not equal to 50%. The additional current may be generated by integrating a net current obtained from a first current source having a fixed value and an opposing second current source controlled by the output signal of the current comparator.

In some embodiments, the first / second time delay may be generated using a digital counter.

The input and/or output voltage may be measured using an analog-to-digital converter.

According to a further aspect of the invention, there is provided a power supply for an LED matrix, comprising a switch-mode power converter as defined above.

This may be useful for providing a constant current output to the LED matrix with a switching frequency substantially independent of output voltage.

BRIEF DESCRIPTION OF THE DRAWINGS

Embodiments of the present invention will be described, by way of example only, with reference to the accompanying drawings in which like reference signs relate to like elements and in which:

Figure 1 shows a conventional hysteretic buck converter useful for understanding the present invention;

Figure 2 illustrates the required current ripple $I_{pp}$ as a function of duty cycle $\delta = V_{out}/V_{in}$ for maintaining a substantially constant switching frequency;

Figure 3 illustrates a median converter with fixed current ripple useful for understanding the present invention;

Figure 4 illustrates the variation with time of control voltage $V_{Ctrl}$, inductor current $I_L$, current comparator output signal $V_{CMP}$, and first and second voltage ramps $V_{ramp1}$ and $V_{ramp2}$ in the median converter with fixed current ripple of Figure 3;

Figure 5 illustrates a power converter according to an embodiment of the present invention;

Figures 6A to 6D illustrate various implementations of the current sources 252, 262 in the power converter of Figure 5;

Figures 7A and 7B show cascoded current mirrors with offset compensation for generating reference voltages proportional to $V_{in}-V_{out}$ and $V_{out}$ respectively for the voltage comparators 258, 268 in the power converter of Figure 5;

Figure 8 shows the results of a simulation of the median converter with fixed current ripple shown in Figure 3;

Figures 9A-C show the results of simulations of the power converter with variable current ripple shown in Figure 5;

Figures 10A-C illustrate the effect of the control circuit 280 shown in Figure 11;

Figure 11 shows circuitry for generating the current sources 252, 262 and the reference voltages $V_{ref1}$ and $V_{ref2}$ for the voltage comparators 258, 268 in the power converter of Figure 5; and

Figure 12 shows a power converter according to a further embodiment of the present invention.

DETAILED DESCRIPTION

As discussed above, the conventional hysteretic converter 10 shown in Figure 1 exhibits a switching frequency f which varies with output voltage $V_{out}$. The present invention is based on the realisation that the switching frequency may be stabilised by making the hysteresis, and thus the current ripple $I_{pp}$, dependent on the output voltage $V_{out}$.

For the switching frequency

$$f = \frac{1}{L * I_{pp}} * \frac{V_{out} * (V_{in} - V_{out})}{V_{in}}$$

to be constant, $I_{pp}$ must vary with $V_{in}$ and $V_{out}$ as follows:

$$I_{pp}(V_{in}, V_{out}) = \frac{1}{f * L} * \frac{V_{out} * (V_{in} - V_{out})}{V_{in}} = \frac{V_{out}}{f * L} * (1 - \delta) = \frac{V_{in}}{f * L} * \delta * (1 - \delta)$$

By making the current ripple $I_{pp}$ dependent on output voltage $V_{out}$ and duty-cycle $\delta = V_{out}/V_{in}$, the switching frequency f becomes constant.

Figure 2 shows the required variation of the current ripple $I_{pp}$ ($V_{in}$, $V_{out}$) as a function of duty-cycle $\delta = V_{out}/V_{in}$, for f = 500 kHz, $V_{in}$ = 60 V and L = 68 $\mu$H. For low and high duty-cycles, the current ripple $I_{pp}$ approaches zero, which is acceptable.

The invention is implemented based on a hysteretic converter with emulated current ripple, also called a median converter because the median of the current is kept constant. This converter uses two counters or sawtooth generators to emulate the ripple current. A benefit of the median converter is its lower sensitivity to delays in the power stage.

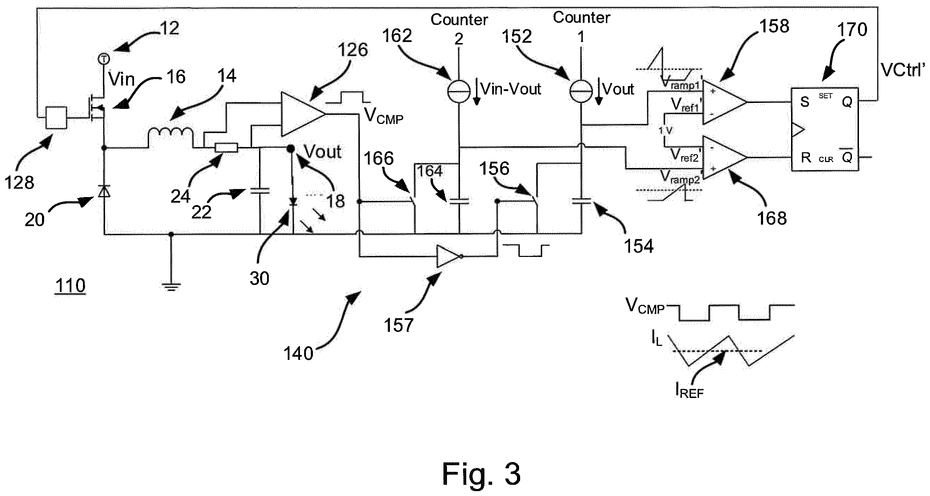

Figure 3 shows a median converter 110 with fixed current ripple $I_{pp}$, useful for understanding the present invention. A power source 12 providing an input voltage $V_{in}$ is selectively connected to an inductor 14 by a switching element 16 in the form of a MOSFET. A power output 18 is coupled to the inductor 14 for providing an output voltage $V_{out}$ to a load 30 in the form of an LED. A diode 20 is connected in parallel with the power source 12 and switching element 16. A capacitor 22 is connected in parallel with the power output 18 to filter the output voltage $V_{out}$. A resistor 24 is provided in series with the inductor 14 for sensing the current through the inductor 14. A current comparator 126 with no hysteresis compares the sensed inductor current $I_L$ with a reference value $I_{REF}$ and outputs a current comparator output signal $V_{CMP}$. In the median converter 110, the current comparator 126 has no hysteresis. A control circuit 140 receives the current comparator output signal $V_{CMP}$ and generates a control signal $V_{Ctrl}$' for controlling the switching element 16 via a gate drive 128.

Assuming the inductor current $I_L$ increases and decreases linearly with time, the current comparator 126 of the median converter 110 toggles at the average current, which is exactly halfway up each slope. When operating in steady state with the average inductor current at a value corresponding to the setpoint or reference current level $I_{REF}$ of the current comparator 126, the current comparator output signal $V_{CMP}$ will have a 50 % duty-cycle. The control circuit 140 is therefore required to convert the current comparator output signal $V_{CMP}$ into a control signal $V_{Ctrl}$ suitable for controlling the switching element 16 via the gate drive 128 at the correct timing, i.e. at times at which the inductor current reaches the desired maximum and minimum values.

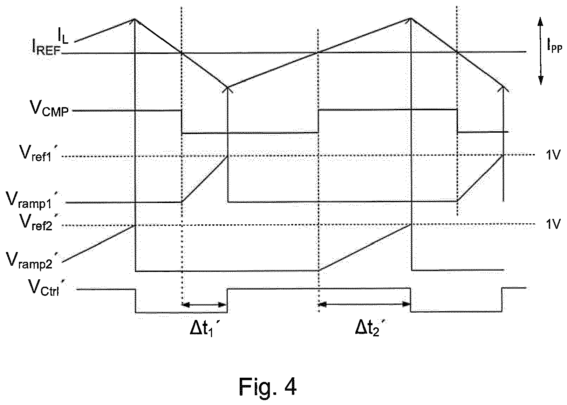

The control circuit 140 receives the output $V_{CMP}$ of the current comparator 126, generates first and second time delays $\Delta t_1$' and $\Delta t_2$' using sawtooth generators and outputs the control signal $V_{Ctrl}$' based on the current comparator output signal $V_{CMP}$ and the first and second time delays. As shown in Figure 4, the transitions of the control signal $V_{Ctrl}$' used for switching the switching element 16 on and off are delayed relative to the transitions of the current comparator output signal $V_{CMP}$ by the first and second time delays $\Delta t_1$' and $\Delta t_2$'respectively. To emulate the fixed current ripple $I_{pp}$ of the conventional hysteretic converter shown in Figure 1, the median converter with fixed current ripple shown in Figure 3 generates a first time delay $\Delta t_1$' proportional to $T_{off}$ = L · $I_{pp}$ / ($V_{out}$) and a second time delay $\Delta t_2$'proportional to $T_{on}$ = L · $I_{pp}$ / ($V_{in}$-$V_{out}$) respectively, where $I_{pp}$ is the required fixed current ripple.

The first time delay $\Delta t_1$', proportional to 1/ $V_{out}$ , is generated by comparing a voltage ramp $V_{ramp1}$' having slope $V_{out}$ and a reference voltage $V_{ref1}$' set at a fixed value, for example 1V. A current source 152, providing a current proportional to $V_{out}$, is connected to a capacitor 154, which is selectively shorted to ground by a switch 156. The switch 156 is controlled by a signal output from an inverter 157 which inverts the output signal $V_{CMP}$ from the current comparator 126. During the off time of the switching element 16, the output voltage $V_{CMP}$ of the current comparator 126 transitions to low when the inductor current $I_L$ decreases below the reference value $I_{REF}$, and the output of the inverter 157 correspondingly transitions high, causing switch 156 to open and the capacitor 154 to start charging from the current source 152. The voltage $V_{ramp1}$' across the capacitor 154 increases at a rate proportional to the current output by current source 152, i.e. at a rate proportional to $V_{out}$. A first voltage comparator 158 compares $V_{ramp1}$' with the fixed reference voltage $V_{ref1}$' and its output transitions high when $V_{ramp1}$' increases above $V_{ref1}$'. This occurs at a time $\Delta t_1$', proportional to 1/

$V_{out}$, after the output $V_{CMP}$ of the current comparator 126 transitions to low.

The second time delay $\Delta t_2'$, proportional to $1/(V_{in}-V_{out})$, is generated by comparing a voltage ramp $V_{ramp2}'$ having slope $V_{in}-V_{out}$ and a reference voltage $V_{ref2}'$ set at a fixed value, for example 1V. A current source 162, providing a current proportional to $V_{in}-V_{out}$, is connected to a capacitor 164, which is selectively shorted to ground by a switch 166. The switch 166 is controlled by the output signal $V_{CMP}$ from the current comparator 126. During the on time of the switching element 16, the output voltage $V_{CMP}$ of the current comparator 126 transitions to high when the inductor current $I_L$ increase above the reference value $I_{REF}$, causing switch 166 to open and the capacitor 164 to start charging from the current source 162. The voltage $V_{ramp2}'$ across the capacitor 164 increases at a rate proportional to the current output by current source 162, i.e. at a rate proportional to $V_{in}-V_{out}$. A second voltage comparator 168 compares $V_{ramp2}'$ with the fixed reference voltage $V_{ref2}'$ and its output transitions high when $V_{ramp2}'$ increases above $V_{ref2}'$. This occurs at a time $\Delta t_2'$, proportional to $1/(V_{in}-Vout)$, after the output $V_{CMP}$ of the current comparator 126 transitions to high.

The outputs of the first and second voltage comparators 158, 168 are connected to the set and reset inputs respectively of a latch 170. The output $V_{ctrl}'$ of the latch 170 is used to control the switching element 16 via gate drive 128. Since the slope of each analog delay sawtooth ramp $V_{ramp1}'$ and $V_{ramp2}'$ is related to the input and output voltages $V_{in}$ and $V_{out}$ in the same way as the inductor ripple current, the use of constant reference voltages $V_{ref1}'$ and $V_{ref2}'$ results in a fixed current ripple $I_{pp}$ or hysteresis, as can be seen in Figure 4. However, as discussed above, a constant current ripple $I_{pp}$ results in a variable frequency f.

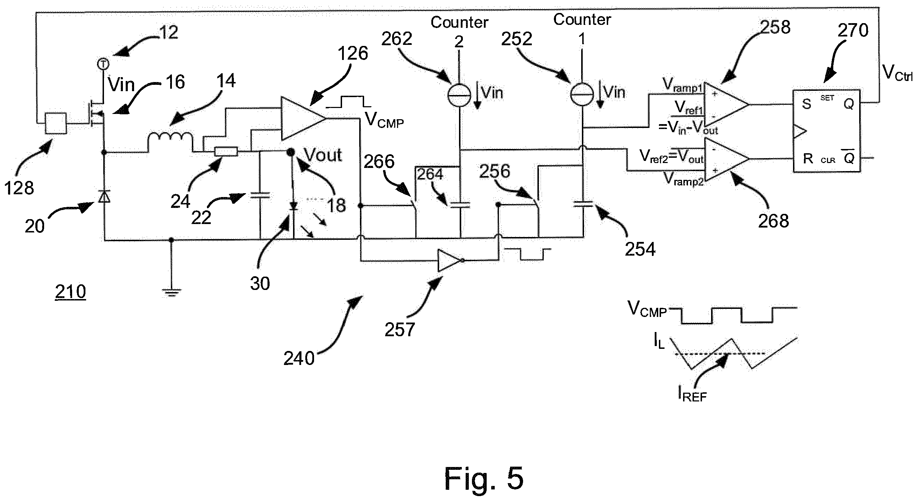

Figure 5 shows a converter 210 with variable ripple current $I_{pp}(V_{in}, V_{out})$, according to an embodiment of the present invention. A power source 12 providing an input voltage $V_{in}$ is selectively connected to an inductor 14 by a switching element 16 in the form of a MOSFET. A power output 18 is coupled to the inductor 14 for providing an output voltage $V_{out}$ to a load 30 in the form of an LED. A diode 20 is connected in parallel with the power source 12 and switching element 16. A capacitor 22 is connected in parallel with the power output 18 to filter the output voltage $V_{out}$. A resistor 24 is provided in series with the inductor 14 for sensing the current through the inductor 14. A current comparator 126 with no hysteresis compares the sensed inductor current $I_L$ with a reference value $I_{REF}$ and outputs a current comparator output signal $V_{CMP}$. The current comparator 126 has no hysteresis.

A control circuit 240 receives the current comparator output signal $V_{CMP}$ and generates a control signal Vctri for controlling the switching element 16 via a gate drive 128. The control circuit 240 receives the output $V_{CMP}$ of the current comparator 126, generates first and second time delays $\Delta t_1$ and $\Delta t_2$ using sawtooth generators and outputs a control signal $V_{Ctrl}$ based on the current comparator output signal $V_{CMP}$ and the first and second time delays. The transitions of the control signal $V_{Ctrl}$ used for switching the switching element 16 on and off are delayed relative to the transitions of the current comparator output signal $V_{CMP}$ by the first and second time delays $\Delta t_1$ and $\Delta t_2$ respectively. The control circuit 240 in this embodiment differs from the control circuit 140 of the median converter 110 shown in Figure 3 in that it generates first and second time delays $\Delta t_1$ and $\Delta t_2$ which depend on the input and output voltages $V_{in}$ and $V_{out}$ in such a way as to reduce or eliminate variations in the switching frequency of the converter 240. As a result, the ripple current Ipp is not fixed.

As discussed above, for the switching frequency f to be constant, the current ripple Ipp must vary with $V_{in}$ and $V_{out}$ as follows:

$$I_{pp}(V_{in}, V_{out}) = \frac{1}{f*L} * \frac{V_{out}*(V_{in}-V_{out})}{V_{in}} = \frac{V_{out}}{f*L}*(1-\delta) = \frac{V_{in}}{f*L}*\delta*(1-\delta)$$

Thus the on time $T_{on}$ is given by:

$$T_{on} = L \cdot I_{pp}(V_{in}, V_{out}))/(V_{in}-V_{out})$$

$$= V_{out}/(f \cdot V_{in})$$

$$= \delta/f$$

and the off time $T_{off}$ is given by:

$$T_{off} = L \cdot I_{pp}(V_{in}, V_{out}))/ V_{out}$$

$$= (V_{in} - V_{out}) / (f \cdot V_{in})$$

$$= (1 - \delta) / f$$

where $\delta = V_{out}/V_{in}$, is the duty cycle of the converter 210 and f is a constant switching frequency.

The control circuit 240 generates a first time delay $\Delta t_1$ proportional to $V_{out} / V_{in}$ and a second time delay $\Delta t_2$ proportional to $(V_{in} - V_{out}) / V_{in}$.

Using sawtooth generators to generate the time delays, each time delay is inversely proportional to the capacitor charging current and proportional to the voltage comparator reference level. In this embodiment, the capacitor charging current is proportional to $1/V_{in}$ for both delay times, while the voltage comparator levels are proportional to $V_{out}$ and $(V_{in}-V_{out})$ respectively.

The first time delay $\Delta t_1$, proportional to $V_{out} /V_{in}$, is generated by comparing a voltage ramp $V_{ramp1}$ having slope proportional to $V_{in}$ and a reference voltage $V_{ref1}$ proportional to $V_{out}$. A current source 252, providing a current proportional to $V_{in}$, is connected to a capacitor 254, which is selectively shorted to ground by a switch 256. The switch 256 is controlled by a signal output from an inverter 257 which inverts the output signal $V_{CMP}$ from the current comparator 126. During the off time of the switching element 16, the output voltage $V_{CMP}$ of the current comparator 126 transitions to low when the inductor current $I_L$ decreases below the reference value $I_{REF}$, and the output of the inverter 257 correspondingly transitions high, causing switch 256 to open and the capacitor 254 to start charging from the current source 252. The voltage $V_{ramp1}$ across the capacitor 254 increases at a rate proportional to the current output by current source 252, i.e. at a rate proportional to $V_{in}$. A first voltage comparator 258 compares $V_{ramp1}$ with the reference voltage $V_{ref1}$ proportional to $V_{out}$ and its output transitions high when $V_{ramp1}$ increases above $V_{ref1}$. This occurs at a time $\Delta t_1$, proportional to $V_{out}/V_{in}$, after the output $V_{CMP}$ of the current comparator 126 transitions to low.

The second time delay $\Delta t_2$, proportional to $(V_{in} - V_{out}) / V_{in}$, is generated by comparing a voltage ramp $V_{ramp2}$ having slope $V_{in}$ and a reference voltage $V_{ref2}$ proportional to $(V_{in} - V_{out})$. A current source 262, providing a current proportional to $V_{in}$, is connected to a capacitor 264, which is selectively shorted to ground by a switch 266. The switch 266 is controlled by the output signal $V_{CMP}$ from the current comparator 126. During the on time of the switching element 16, the output voltage $V_{CMP}$ of the current comparator 126 transitions to high when the inductor current $I_L$ increase above the reference value $I_{REF}$, causing switch 266 to open and the capacitor 264 to start charging from the current source 262. The voltage $V_{ramp2}$ across the capacitor 264 increases at a rate proportional to the current output by current source 262, i.e. at a rate proportional to $V_{in}$. A second voltage comparator 268 compares $V_{ramp2}$ with the reference voltage $V_{ref2}$ proportional to $(V_{in} - V_{out})$ and its output transitions high when $V_{ramp2}$ increases above $V_{ref2}$. This occurs at a time $\Delta t_2$, proportional to $(V_{in} - V_{out}) / V_{in}$, after the output $V_{CMP}$ of the current comparator 126 transitions to high.

The outputs of the first and second voltage comparators 258, 268 are connected to the set and reset inputs respectively of a latch 270. The output $V_{ctrl}$ of the latch 270 is used to control the switching element 16 via gate drive 128. The current ripple $I_{pp}$ now varies with output voltage $V_{out}$, but the switching frequency f remains substantially constant.

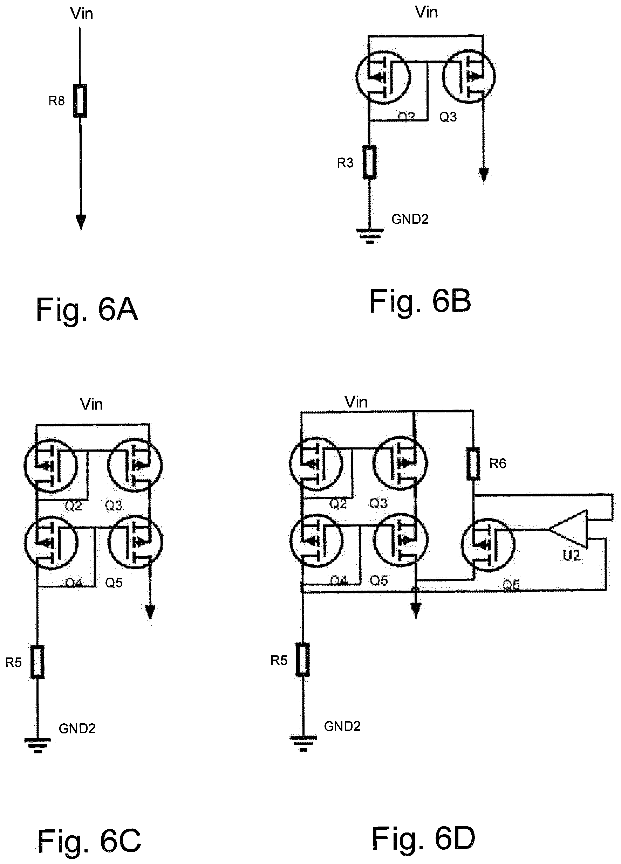

The current sources 252, 262 proportional to $V_{in}$, used to generate the voltage ramps $V_{ramp1}$ and $V_{ramp2}$ input to the first and second voltage comparators 258, 268, may be implemented in various ways, including using a simple resistor (Figure 6A), current mirrors (Figure 6B), cascoded mirror (Figures 6C) or a cascoded mirror with offset compensation (Figure 6D). In each of the circuits shown in Figures 6A to 6D, a current proportional to $V_{in}$ is generated at the output indicated by the arrow. The basic current mirror shown in Figure 6B converts the input supply voltage $V_{in}$ to a proportional current. Such a circuit is known to have a moderate output impedance due to the Early effect. The output current will be influenced by the voltage on the output terminal. The cascoded mirror shown in Figure 6C has a much better output impedance. However, there is an error in the conversion of voltage to current due to the two gate threshold voltages of the MOSFETS Q2, Q4 in series with the resistor R5. The missing current is 2*(threshold voltage)/R5. Especially for low $V_{in}$, the current will be lower than desired. The cascoded mirror with offset compensation shown in Figure 6D includes an additional op amp U2 and transistor Q5 which generates the required extra current.

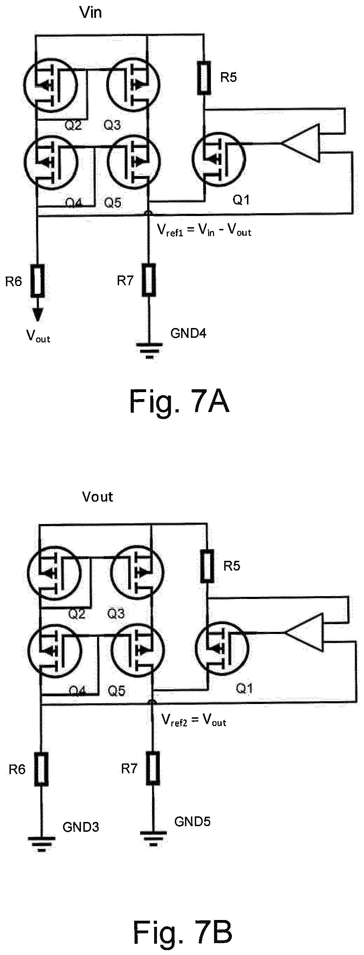

The reference levels $V_{ref1}$ and $V_{ref2}$ input to the first and second voltage comparators 258, 268 can also be implemented using current mirror arrangements similar to those used for the current sources 252, 262. Figures 7A and 7B show cascoded mirrors with offset compensation for generating $V_{ref1}$ and $V_{ref2}$ respectively. In Figure 7A, the voltage $V_{ref1}$ generated across resistive element R7 is proportional to $(V_{in} - V_{out})$. In Figure 7B, the voltage $V_{ref2}$ generated across resistive element R7 is proportional to $V_{out}$. This circuit may be replaced by a resistive voltage divider for generating $V_{ref2}$. These circuits rely on matching and are very suitable for integration.

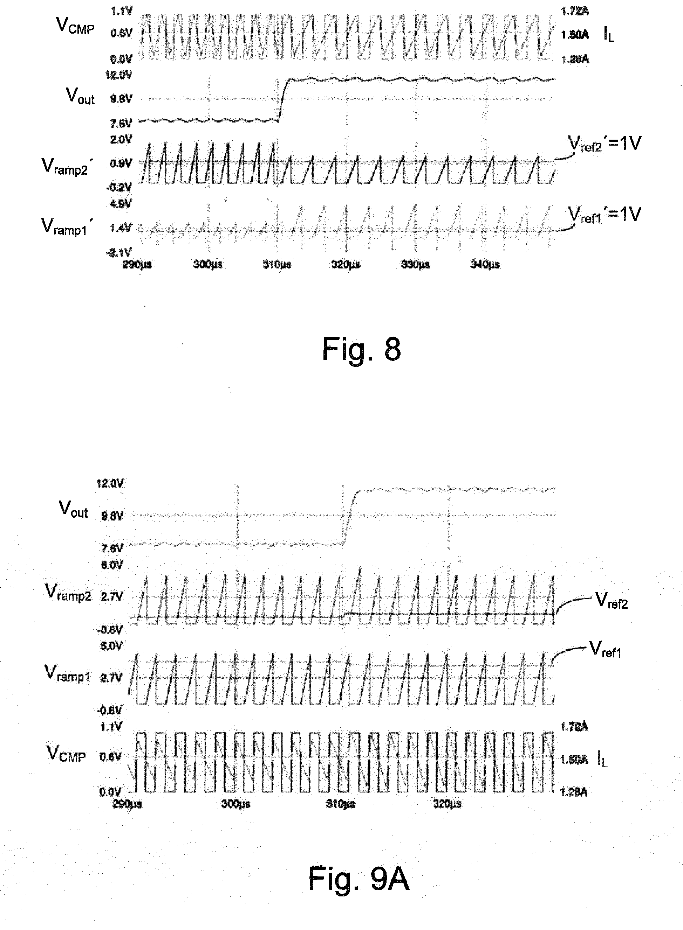

Figure 8 shows results of a simulation of the median converter with fixed current ripple as described above with reference to Figure 3. At time 310μs, the output voltage $V_{out}$ increases from about 7.8V to about 11.8V. The inductor current $I_L$ has a fixed current ripple $I_{pp}$, but the frequency of the current ripple varies with output voltage $V_{out}$.

Figure 9A shows the results of a simulation of the converter according to the embodiment of the present invention described above with reference to Figure 5, with inductance L=47μH and input voltage Vin=60V. As in the previous example, at time 310μs, the output voltage $V_{out}$ increases from about 7.8V to about 11.8V. The inductor current $I_L$ now has a current ripple $I_{pp}$ of variable magnitude. However the frequency of the current ripple is substantially fixed at about 500kHz.

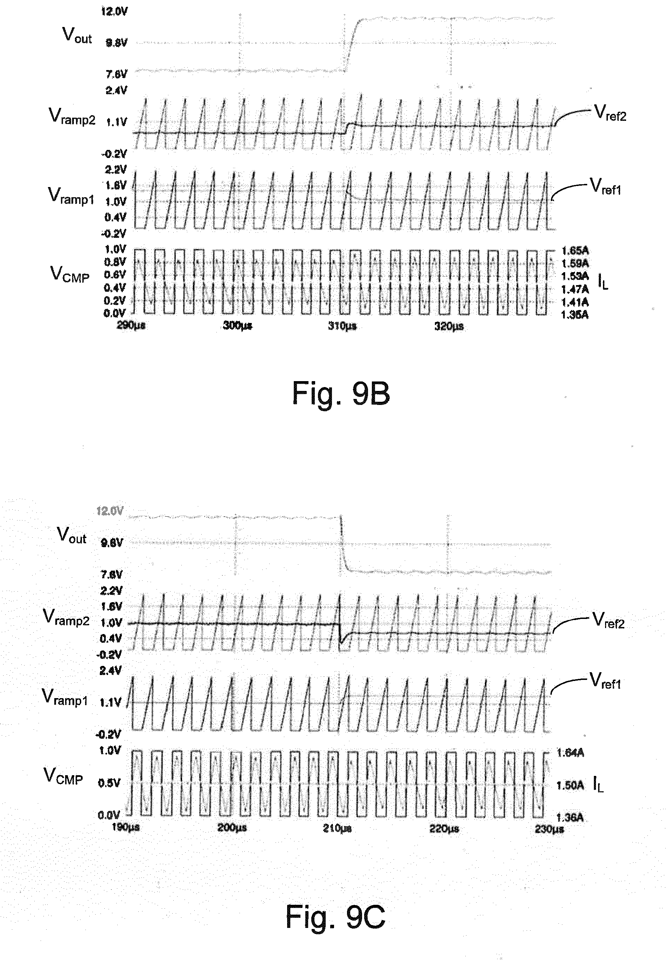

Figure 9B shows the results of another simulation of the converter according to the embodiment of the present invention described above with reference to Figure 5, with inductance L=47μH and input voltage $V_{in}$=25V. The frequency of the current ripple is substantially fixed and is only 5% lower than in the example of Figure 9A with $V_{in}$=60V.

Figure 9C shows the results of another simulation of the converter according to the embodiment of the present invention described above with reference to Figure 5, with inductance L=47μH and input voltage $V_{in}$=25V. In this example, the output voltage $V_{out}$ has a negative slope at 310μs, decreasing from about 11.8V to 7.8 V. Again, the frequency of the converter is fixed.

In each of the examples shown in Figures 9A to 9C, there is a clear change in the amplitude of the current ripple and in the duty-cycle, corresponding to the change in output voltage $V_{out}$ around time 310μs. However, the frequency remains substantially constant. The median converter (Figure 3) already benefits from insensitivity to the inductor value and to delays in the power stage. The present invention retains these advantages, in addition to the further advantage of a constant frequency. Although the frequency is not absolutely fixed, since it is not controlled by an oscillator, it spreads much less than in the case of a conventional hysteretic converter. In the ideal case, the frequency does not vary with input voltage $V_{in}$ or output voltage $V_{out}$. However, small deviations in frequency occur with input voltage $V_{in}$ and output voltage $V_{out}$, for example due to non-linearities in the current sources and leakage of the capacitors, and temperature. Power stage delays introduce a further dependence of the frequency on current. Nonetheless, the variation in frequency is expected to be less than 5-10% when operating in Continuous Current Mode.

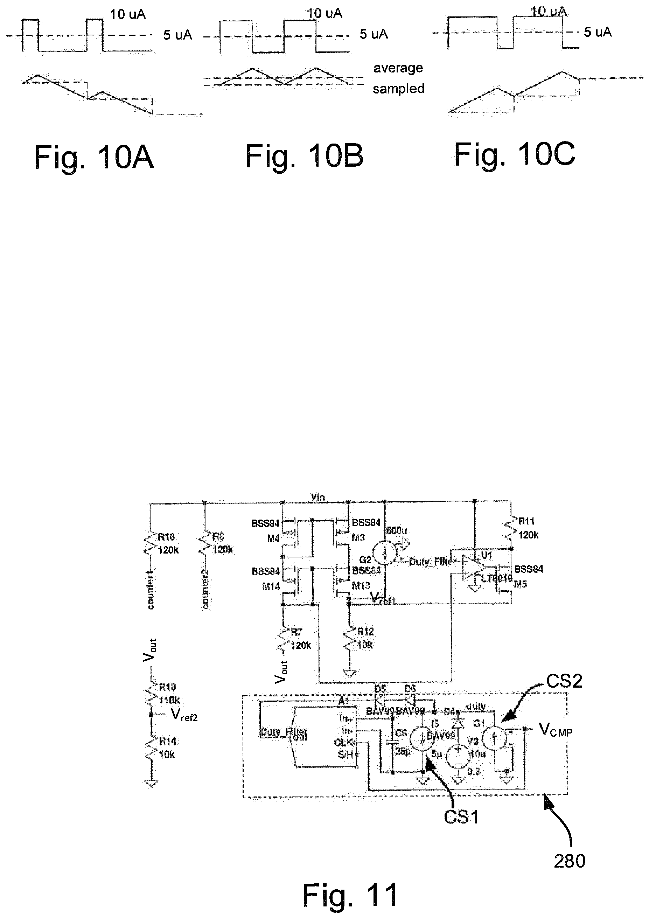

For very low currents, delays in the power stage may result in an error in the current and an output $V_{CMP}$ of the current comparator not having a 50 % duty-cycle. The power converter of the present invention may include further circuitry for varying one of the first or second time delays $\Delta t_1$, $\Delta t_2$ to compensate such delays. Figure 11 shows circuitry for generating the current sources 252 and 262 and the reference voltages $V_{ref1}$ and $V_{ref2}$., and includes further circuitry, in the form of a simple control circuit 280, which can inject some extra current into one of the delay circuits to raise the trigger level $V_{ref1}$ or $V_{ref2}$ and make the respective time delay $\Delta t_1$, $\Delta t_2$ longer. In this embodiment, the current sources 252 and 262 are proportional to $V_{in}$ and are implemented using simple resistors R16 and R8. The second reference voltage $V_{ref2}$, proportional to $V_{out}$, is obtained by a resistive divider. The first reference voltage $V_{ref1}$, proportional to $V_{in}-V_{out}$, is obtained by a cascoded current mirror with offset compensation (similar to the arrangement shown in Figure 6D) with further compensation provided by the additional control circuit shown in the dashed rectangle. The additional control circuit 280 includes one fixed current source CS1 (in this example, 5μA) and one switched current source CS2 (in this example, 0, 10μA), controlled by the output voltage $V_{CMP}$ of the current comparator 126, which should have a 50% duty cycle. When the duty cycle is exactly 50%, the fixed current source and switched current source of the control circuit deliver zero net current. When the duty cycle is not exactly 50%, the resulting net current is integrated and the filter voltage output by the control circuit is used to drive a current source that adds to the normal current source. A Sample & Hold circuit filters out the switching frequency ripple. The extra current can make the off-time $T_{off}$ longer, by increasing $V_{ref1}$.

The effect of the control circuit 280 of Figure 11 is illustrated in Figures 10A-C. In Figure 10A, the current is too low. The duty cycle of the current comparator 126 is less than 50%, and the current sampled by the control current decreases, resulting in reduction of $V_{ref1}$ and a shortening of $T_{off}$. In Figure 10B, the current is correct. The duty cycle of the current comparator 126 is exactly 50%, and the sampled current in the control circuit is zero, so that the control circuit makes no change to $V_{ref1}$. In Figure 10C, the current is too high. The duty cycle of the current comparator 126 is greater than 50%, and the current sampled by the control current increases, resulting in an increase of $V_{ref1}$ and a lengthening of $T_{off}$.

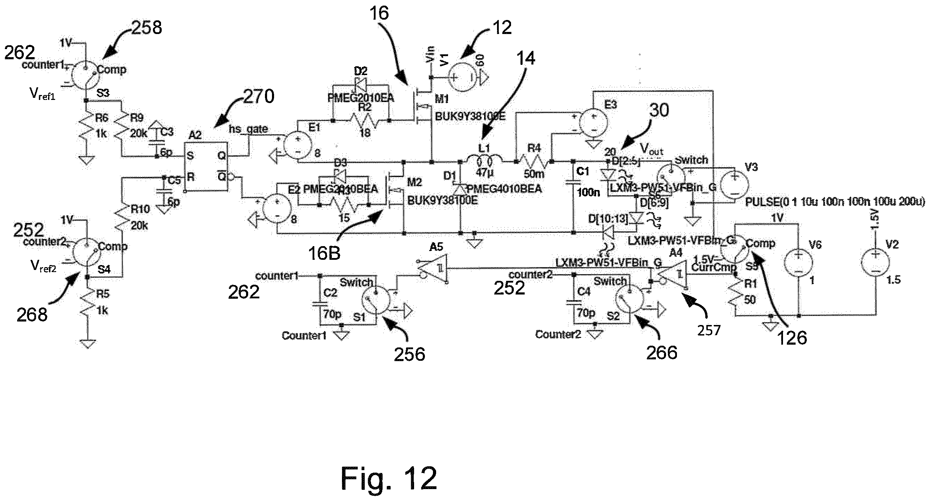

A further embodiment of a power converter according to the present invention is shown in Figure 12, for integration with the circuitry of Figure 11. In this embodiment, the diode 20 of the embodiment shown in Figure 5 is replaced by a further switching element 16B. In this embodiment, the converter is always in Continuous Conduction mode, and the frequency remains close to a constant value However, it is also possible to rely on a good freewheeling diode. When using a diode instead of a switch, the converter can enter Discontinuous Current Mode, in which the equations given above no longer apply and the frequency becomes lower. Nonetheless, even in Discontinuous Current Mode, the frequency of this design remains between 250 kHz and 600 kHz, which is a lot better than the conventional hysteretic converter.

In the embodiments described above, all circuits are analog. However, it is also possible to implement the invention using digital blocks. The sawtooth generators are then replaced by counters with variable increment. Input and output voltages can be measured with ADCs.

In the present invention as described above, the adjustment of the current ripple is done by means of feed-forward to improve speed and maintain stability. It is an open-loop addition that does not influence stability. The invention may be based on a modified median converter with no external components required. All components may be so small they can be integrated, and their values are not critical. An extra feedback loop as described above in connection with Figure 11 may reduce the effect of delays in the power stages and current comparator for best current accuracy.

Although particular embodiments of the invention have been described above, it will be appreciated than many modifications, including additions and/or substitutions, may be made within the scope of the appended claims.

**Claims**

1.  A switch-mode power converter comprising:

    an inductive element having an input and an output;
    a switching device for selectively connecting said input of said inductive element to a power source;
    a power output for connection to a load, said power output being coupled to said output of said inductive element,
    a current comparator configured to generate a current comparator output signal based on a comparison of a current flowing through the inductive element and a reference current level; and
    a control circuit for generating a control signal for controlling the switching device, wherein the control circuit is configured to generate said control signal based on the current comparator output signal, a first time delay proportional to $(V_{in} - V_{out}) / V_{in}$ and a second time delay proportional to $V_{out} / V_{in}$ where $V_{in}$ is the voltage at the power source and $V_{out}$ is the voltage at the power output.

2.  A switch-mode power converter according to claim 1, wherein the control signal causes the switching device to have an on-time proportional to $V_{out} / V_{in}$, and an off-time proportional to $1-V_{out} / V_{in}$.

3.  A switch-mode power converter according to claim 1 or claim 2, wherein said reference current level corresponds to an average current level.

4.  A switch-mode power converter according to any one of the preceding claims, wherein:

    said control signal commands said switching device to switch on at a time equal to said first time delay after said current comparator output signal indicates that said current decreases to a level below said reference current level, and
    said control signal commands said switching device to switch off at a time equal to said second time delay after said current comparator output signal indicates said current increases to a level above said reference current level.

5.  A switch-mode power converter according to any one of the preceding claims, wherein:

    said first time delay is implemented using a first voltage ramp and a first voltage comparator for comparing said first voltage ramp with a first reference voltage, and/or
    said second time delay is implemented using a second voltage ramp and a second voltage comparator for comparing said second voltage ramp with a second reference voltage.

6.  A switch-mode power converter according to claim 5, wherein said first/second voltage ramp is triggered by the current comparator output signal.

7.  A switch-mode power converter according to claim 5 or claim 6, wherein a slope of said first/second voltage ramp is proportional to $V_{in}$.

8.  A switch-mode power converter according to any one of claims 5 to 7, wherein said first/second voltage ramp is generated by charging a capacitor from a current source.

9.  A switch-mode power converter according to claim 8, wherein said current source is provided by at least one of the following:

a resistance;
a current mirror;
a cascoded current mirror; or
a cascoded current mirror with offset compensation.

**10.** A switch-mode power converter according to any of claims 5 to 9, wherein said first reference voltage is proportional to ($V_{in}$-$V_{out}$).

**11.** A switch-mode power converter according to any of claims 5 to 10, wherein said second reference voltage is proportional to $V_{out}$.

**12.** A switch-mode power converter according to any of claims 5 to 11, wherein said first and/or second reference voltage is provided by at least one of the following:

a voltage divider;
a current mirror;
a cascoded mirror; or
a cascoded mirror with offset compensation.

**13.** A switch-mode power converter according to any of claims 5 to 12, comprising further circuitry for varying one of said first and second time delays to compensate delays in the power converter.

**14.** A switch-mode power converter according to any of claims 1 to 13, wherein said first / second time delay is generated using a digital counter.

**15.** A power supply for an LED matrix, comprising a switch-mode power converter according to any of claims 1 to 14.

Fig. 1 (Prior art)

Fig. 2

Fig. 3

EP 3 468 022 A1

Fig. 4

Fig. 5

Vin

R8

Fig. 6A

Vin

Q2    Q3

R3

GND2

Fig. 6B

Vin

Q2    Q3

Q4    Q5

R5

GND2

Fig. 6C

Vin

Q2    Q3

Q4    Q5

R6

R5

Q5    U2

GND2

Fig. 6D

Fig. 7A

Fig. 7B

Fig. 8

Fig. 9A

Fig. 9B

Fig. 9C

Fig. 10A        Fig. 10B        Fig. 10C

Fig. 11

Fig. 12

Europäisches
Patentamt

European
Patent Office

Office européen
des brevets

**EUROPEAN SEARCH REPORT**

Application Number

EP 17 19 4694

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/262724 A1 (MEDNIK ALEXANDER [US] ET AL) 15 November 2007 (2007-11-15) * paragraphs [0033], [0034]; figures 7,8 * | 1-15 | INV. H02M3/155 H02M3/157 H05B33/08 |
| A | YANQI ZHENG ET AL: "A Fast-Response Pseudo-PWM Buck Converter With PLL-Based Hysteresis Control", IEEE TRANSACTIONS ON VERY LARGE SCALE INTEGRATION (VLSI) SYSTEMS., vol. 20, no. 7, 1 July 2012 (2012-07-01), pages 1167-1174, XP055462995, PISCATAWAY, NJ, USA ISSN: 1063-8210, DOI: 10.1109/TVLSI.2011.2156437 * page 1168, right-hand column * | 1 | ADD. H02M1/00 |
| A | PENGFEI LI ET AL: "A 90 240 MHz Hysteretic Controlled DC-DC Buck Converter With Digital Phase Locked Loop Synchronization", IEEE JOURNAL OF SOLID-STATE CIRCUITS, IEEE SERVICE CENTER, PISCATAWAY, NJ, USA, vol. 46, no. 9, 1 September 2011 (2011-09-01), pages 2108-2119, XP011381445, ISSN: 0018-9200, DOI: 10.1109/JSSC.2011.2139550 * page 2108, right-hand column * | 1 | |

TECHNICAL FIELDS SEARCHED (IPC)

H02M
H05B

-/--

The present search report has been drawn up for all claims

| Place of search | Date of completion of the search | Examiner |
|---|---|---|
| The Hague | 10 April 2018 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PENGFEI LI ET AL: "A Delay-Locked Loop Synchronization Scheme for High-Frequency Multiphase Hysteretic DC-DC Converters", IEEE JOURNAL OF SOLID-STATE CIRCUITS, IEEE SERVICE CENTER, PISCATAWAY, NJ, USA, vol. 44, no. 11, 1 November 2009 (2009-11-01), pages 3131-3145, XP011279285, ISSN: 0018-9200, DOI: 10.1109/JSSC.2009.2033508 * page 3132, right-hand column * | 1 | |
| A | CHUNG-HSIEN TSO ET AL: "A ripple control buck regulator with fixed output frequency", IEEE POWER ELECTRONICS LETTERS, IEEE SERVICE CENTER, NEW YORK, NY, US, vol. 99, no. 3, 1 September 2003 (2003-09-01), pages 61-63, XP011428023, ISSN: 1540-7985, DOI: 10.1109/LPEL.2003.819643 * page 61, right-hand column * | 1 | TECHNICAL FIELDS SEARCHED (IPC) |
| A | SUN ZHUOCHAO ET AL: "A Fixed-frequency hysteretic controlled buck DC-DC converter with improved load regulation", 2014 IEEE INTERNATIONAL SYMPOSIUM ON CIRCUITS AND SYSTEMS (ISCAS), IEEE, 1 June 2014 (2014-06-01), pages 954-957, XP032624839, DOI: 10.1109/ISCAS.2014.6865295 [retrieved on 2014-07-24] * page 954, right-hand column * | 1 | |

-/--

The present search report has been drawn up for all claims

| Place of search | Date of completion of the search | Examiner |
|---|---|---|
| The Hague | 10 April 2018 | Zeljkovic, Sandra |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches Patentamt
European Patent Office
Office européen des brevets

## EUROPEAN SEARCH REPORT

Application Number

EP 17 19 4694

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHUNG TAE-JIN ET AL: "A CMOS hysteretic DC-DC buck converter with a low output ripple voltage", SIXTEENTH INTERNATIONAL SYMPOSIUM ON QUALITY ELECTRONIC DESIGN, IEEE, 2 March 2015 (2015-03-02), pages 86-89, XP032763951, DOI: 10.1109/ISQED.2015.7085404 [retrieved on 2015-04-13] * page 87, right-hand column * | 1-15 | |
| A | CHIEN-YING YU ET AL: "A Low-Power DCO Using Interlaced Hysteresis Delay Cells", IEEE TRANSACTIONS ON CIRCUITS AND SYSTEMS II: EXPRESS BRIEFS, IEEE, US, vol. 59, no. 10, 1 October 2012 (2012-10-01), pages 673-677, XP011468477, ISSN: 1549-7747, DOI: 10.1109/TCSII.2012.2213357 * pages 673-675 * | 1-15 | |

TECHNICAL FIELDS SEARCHED (IPC)

The present search report has been drawn up for all claims

| Place of search | Date of completion of the search | Examiner |
|---|---|---|
| The Hague | 10 April 2018 | Zeljkovic, Sandra |

EPO FORM 1503 03.82 (P04C01)

## ANNEX TO THE EUROPEAN SEARCH REPORT
## ON EUROPEAN PATENT APPLICATION NO.

EP 17 19 4694

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2018

| Patent document cited in search report | Publication date | Patent family member(s) | Publication date |
|---|---|---|---|
| US 2007262724 A1 | 15-11-2007 | US 2007262724 A1<br>US 2009179575 A1 | 15-11-2007<br>16-07-2009 |

EPO FORM P0459

For more details about this annex : see Official Journal of the European Patent Office, No. 12/82